Europäisches Patentamt

(19) European Patent Office

Office européen des brevets

(11) Publication number : **0 526 015 A1**

# (12) EUROPEAN PATENT APPLICATION

(21) Application number : **92306228.5**

(22) Date of filing : **07.07.92**

(51) Int. Cl.$^5$ : **G06K 11/18**

(30) Priority : **08.07.91 IL 98766**

(43) Date of publication of application :
**03.02.93 Bulletin 93/05**

(84) Designated Contracting States :
**AT BE CH DE DK ES FR GB IT LI NL SE**

(71) Applicant : **PEGASUS TECHNOLOGIES Ltd.**
**2, Haelkoshi Street**
**Tel Aviv 64 073 (IL)**

(72) Inventor : **Shenholz, Gideon**
**2, Healkoshi Street**
**Tel Aviv 64 073 (IL)**
Inventor : **Zloter, Yitzhak**
**4, Haavodah Street**
**Holon 58 504 (IL)**

(74) Representative : **Wombwell, Francis et al**
**Potts, Kerr & Co. 15, Hamilton Square**
**Birkenhead Merseyside L41 6BR (GB)**

(54) **Three-dimensional computer mouse.**

(57) A three-dimensional mouse system for a computer's display, or a robot, comprising a pointer, movable in space by the user ; a transmitter, being an integral part of said pointer ; at least three receivers ; a processing unit, having a microprocessor, an input/output communication interface and a connecting unit for information and power transfer ; and a soft-ware means.

The transmitter and the receivers are connected to the microprocessor through the input/output communication interface. The microprocessor is connected through the input/output communication interface to the connecting unit, attached to the computer.

When the receivers react to a signal received from the transmitter, they transfer independently to the microprocessor their output signals, depending correspondingly on the space position of the transmitter with reference to the receivers ; and the microprocessor computes the space position of the transmitter ; and the output signal of the microprocessor is transformed into an appropriate form and is then transferred to the computer and processed by the software means to provide on the computer's display or in the robot's action a three-dimensional reflection, corresponding to the movement of the pointer, in real time, in space.

FIG. 1

EP 0 526 015 A1

## BACKGROUND OF THE INVENTION

Field of the invention

The present invention relates to user input device for computers, more particularly, to an input device, known as a "mouse", providing operation on a display in three dimensions or other three-dimensional action in space, such as robots' manipulation.

Description of the prior art

In the modern computer market a mouse is a common input device. Different types of such a device are used in workstations of medium scale computers, CAD-CAM stations and personal computers.
The known mouse is used by moving it along a horizontal surface. The mouse comprises a ball, extending from the bottom side of its housing. The ball rolls in all directions along the surface according to the mouse movement. The mouse housing comprises sensors, located near the circumference of the ball and perceiving any changes of the ball position. The sensors transform signals, related to the changes of the ball position, into information, which is further transmitted to the computer and thus enables to reflect the mouse movement on the computer display. The housing of the mouse usually has on its surface several additional functional keys for certain "yes-no" operations. Such keys enable performance of few additional functions, such as assigning a dot, choosing one of a menu options, start or termination of a command, etc.

The mouse is used in a very large spectrum of functions: for selecting an optional program from a menu, instead of using the keyboard, or as a tool for drawing in CAD-CAM workstations or other systems.

The main limitation of the present mouse systems is a result of their principle construction: the mouse is supposed to be movable along a two-dimensional surface and cannot work when moving in space, being disconnected from the surface, and thus cannot provide a three-dimensional drawing on a display.

An attempt to solve this problem was made in UK 2234576 A. It describes the user input device, comprising a housing, a ball, mounted in the housing but projecting through an aperture in the housing, and detectors, coupled to the ball so as to generate a control signal variable in two dimensions in response to movements of a user's hand relative to the housing. The device further comprises a further control element, mounted on the housing; and a further detector, responsive to movement by the user of the further control element so as to generate a further control signal variable in a third dimension. The further control element comprises a rotatable ring, closely surrounding the aperture and the further detector is responsive to rotation of the further control element. The device thereby enables a user to generate control signals, variable independently in three dimensions while the hand remains substantially in a position for operating the first mentioned ball.

The disadvantage of the input device described above is the artificial manner of its operation. Using such a device, the user can only create a three-dimensional drawing on a display by first putting on the display a two-dimensional drawing, using a ball, movable by the hand; and then building up a third dimension of the drawing by operating a rotatable ring indicating movement in the third dimension.

## OBJECTS AND SUMMARY OF THE INVENTION

It is the purpose of the present invention to provide a computer input device, a mouse, movable in space by a users hand and enabling to obtain on a computer display a three-dimensional image, corresponding to the user's hand movement in space.
The other purpose is to apply such a mouse to a robot control.

The three-dimensional mouse.system for a computer's display, or a robot, herein provided, comprises a pointer, movable in space by the user; a transmitter, being an integral part of said pointer; at least three receivers; a processing unit, having a microprocessor, an input/output communication interface and a connecting unit for information and power transfer; and a soft-ware means; and said transmitter and said receivers are connected to said microprocessor through said input/output communication interface; and said microprocessor is connected through said input/output communication interface to said connecting unit, attached to said computer;
so that, when said receivers react to a signal received from said transmitter, said receivers through said input/output communication interface transfer independently to maid microprocessor their output signals, depending correspondingly on the space position of said transmitter with reference to said receivers; and said microprocessor computes the space position of said transmitter using the output signals received from said receivers and said transmitter; and the output signal of said microprocessor, representing the information concerning the space position of maid transmitter, is transformed into an appropriate form by said input/output communication interface and is then transferred through said connecting unit to said computer; and the information transferred is then processed by said software means to provide on said computer's display or in said robot's action a three-dimensional reflection, corresponding to the movement of said pointer, in real time, in space.

In the preferred embodiment maid receivers are placed around said display, being connected to it, at predetermined distances between said receivers; and said distances could be calibrated by using a specially designed mode.

In the preferred embodiment said receivers and transmitter are ultra sonic.

In the preferred embodiment said ultra sonic receivers and transmitter work according to a method known as "Different Time of Arrival" (DTOA) method.

In an alternative embodiment said ultra sonic receivers and transmitter work according to a method known as a phase shift detection method.

In the preferred embodiment said pointer is connected to said processing unit by a communication and power cable.

In another preferred embodiment said pointer is connected to said processing unit by means of ultrasonic transmission and receiving means; in such an embodiment the minimal number of said receivers is four.

In an alternative embodiment said transmitter and receivers are optic devices, emitting and receiving light beam signals correspondingly.

In the preferred embodiment said optic transmitter is a source of a light beam and each of said optic receivers comprises a housing, provided with a slot in its frontal wall, facing said transmitter; and said slot is provided by a lens; and the opposite wall of said housing is provided with a longitudinal unit of charge couple device (CCD unit); and said CCD unit is placed perpendicularly to said slot in said frontal wall; and said CCD unit is connected to said microprocessor's input.

The three-dimensional mouse system for a computer's display, or a robot, herein provided, comprises a pointer, movable in space by the user; an optic transmitter; at least three optic receivers; a processing unit, having a microprocessor, an input/output communication interface and a connecting unit for information and power transfer; and software means; and said receivers are connected to said microprocessor through said input/output communication interface; and said microprocessor is connected through said input/output communication interface to said connecting unit, attached to said computer; so that, when said receivers react to an optic signal, received from said pointer, said receivers through said input/output communication interface independently transfer their output signals depend correspondingly on the space position of said pointer with reference to said receivers; and said microprocessor computes the space position of said pointer using said output signals of maid receivers; and the output signal of said microprocessor, representing the information concerning the space position of said pointer, is transformed into an appropriate form by said input/output communication interface and then transferred through said connecting unit to said computer; and the information transferred through said connecting unit is then processed by said software means to provide on said computer's display, or in said robot's action, a three-dimensional reflection, corresponding to the movement of said pointer, in real time, in space.

In the preferred embodiment said optic transmitter is placed on said pointer and provided with a power supply cable for connecting to said processing unit.

In an alternative embodiment said optic transmitter is placed on said pointer; and said pointer is provided with batteries to avoid the need of a cable connection of said pointer to said processing unit.

In an alternative embodiment said optic transmitter is placed away from said pointer; and said pointer has a reflector, reflecting optic beams, received from said transmitter; and said receivers are protected from receiving optic beams directly from said optic transmitter.

In the preferred embodiment said microprocessor is a high speed microprocessor MOTOROLA® 68HC805C4.

In the preferred embodiment maid connecting unit is a standard computer connecting unit RS-232.

In the preferred embodiment said three-dimensional mouse is a low power consumption system, and hence does not require any additional supporting hardware.

In an alternative embodiment said three-dimensional mouse is none low power consumption system.

In the preferred embodiment said three-dimensional mouse system comprises more than three of said receivers to improve the accuracy of computation of said pointer's position in space.

In the preferred embodiment said pointer comprises a plurality of additional functional keys for specific use.

In one preferred embodiment said pointer is in form of a ring, fittable onto a finger of the user.

BRIEF DESCRIPTION OF THE DRAWINGS

Fig.1 illustrates the configuration of the three-dimensional mouse system, assembled on a personal computer (PC).

Fig.2 illustrates a block diagram of the three-dimensional mouse system.

Fig.3 illustrates the optic receiver's construction and the way of computation of the angle between the receiver and the transmitter.

DETAILED DESCRIPTION OF THE PREFERRED EMBODIMENTS

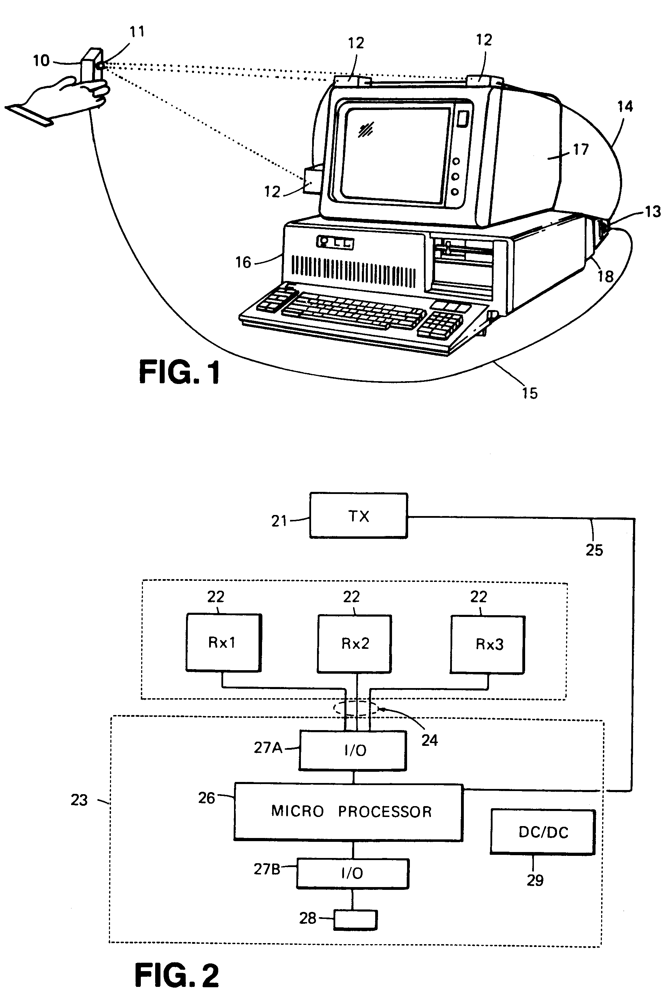

In Fig.1 one can see a three-dimensional (3D) mouse, comprising three main parts. A pointer 10 is a small dimension instrument in which a transmitter 11 is located. Receivers 12 are placed on a PC display 17. The distances between the receivers 12 could be predetermined. The receivers 12 react to the transmitter's 11 movement in apace, and that movement is provided by the user , operating the pointer 10. The pointer 10 is connected to a processing unit 13 with a communication and power cable 15. The receivers 12 are independently connected to the processing unit with a communication and power cable 14. The processing unit 13 is connected to a computer 16 through a connector 18.

The transmitter 11 and the receivers 12 are ultra sonic. All the components of the system are of a low current consumption, hence it is sufficient to supply all the power needed by the system of a standard RS-232 connector of a PC.

In Fig.2 one can see a block diagram of the 3D mouse system, described above. The transmitter 21 moves in apace in front of the computer. The cable 25 connects the communication output and the power input of the transmitter 21 to correspondent components of the processing unit 23. The three receivers 22 are connected independently to the processing unit 23 through the input/output communication interface 27A with the communication and power cable 24. Communication outputs of the receivers 22 and the transmitter 21 are connected to the inputs of a high speed microprocessor 26. The output and input of the microprocessor 26 is connected to a standard computer connector 28 through an input/output communication interface 27B. The processing unit 23 is provided with DC-DC transformer 29 for power supply of the system.

Principle of operation in real time. The transmitter 21 is transmitting signals, which are received by the three receivers 22. The transmitter 21 and the receivers 22 are ultra sonic and work according to the method, known as "Different Time of Arrival" (DTOA) method.

The microprocessor 26 initiates a signal to the transmitter 21 and receives three independent signals from the receivers 22. The microprocessor 26 is computing the time between the moment in which the signal is transmitted to the moment it is received by each of the three receivers. This time is transformed to length by computing the multiplication of the time and the ultra sound speed.

The position of the transmitter (pointer) is computed by the transformations as follows:

$$X = \frac{D_1}{2} + \frac{S_1{}^2 - S_2{}^2}{2D}$$

$$Y = \frac{D_2}{2} + \frac{S_1{}^2 - S_3{}^2}{2D}$$

$$Z = \sqrt{S_1{}^2 - X^2 - Y^2}$$

Where:

X,Y,Z - coordinates of the transmitter in space,

$S_1$ - the distance of the transmitter from the receiver 1,

$S_2$ - -"- from the receiver 2

$S_3$ - -"- from the receiver 3,

$D_1$ - the distance between rec.1-rec.2;

$D_2$ - the distance between rec.2-rec.3.

The results of computation are then transferred in real time from the microprocessor 26 to the communication interface 27 and then, after the appropriate transformation, to the the personal computer through the standand connector 28.

In the processing unit correction of border condition of the pointer and filtering of received signals are also performed.

The PC will run an appropriate program, to enable the display of a body/point in the space.

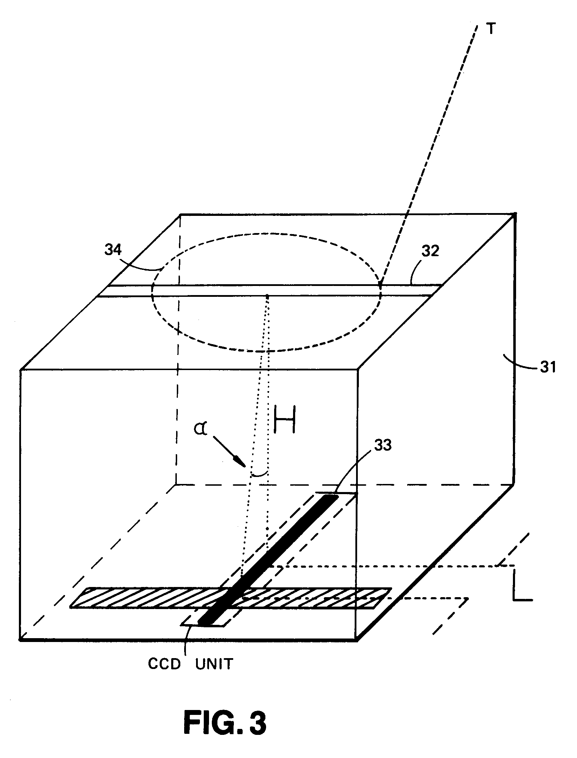

In Fig.3 the optic receiver is shown. The optic angle receiver comprises a housing 31 in form of a cubic box. The front side of the housing 31 is provided with a slot 32; and the opposite bottom side is provided with a Charged Couple Device (CCD) unit 33, which is perpendicular to the slot 32. The slot 32 is provided with an optical lens 34.

A beam from the transmitter T (being the light source) passes through the lens 34, placed on top of the slot 32 and reaches the CCD unit 33. The CCD unit 33 transmits the position of the light spot to the processing unit, which calculates the point of maximum illumination. Using this data the calculation of the angle $\alpha$ is performed by calculating the relation between the height of the box H and the position L of the maximum light point, related to the center of the bottom wall of the housing 31.

The angel $\alpha$ is equal to the angel of the transmitter's position to the certain receiver. The processing unit calculates in real time the cross point of the three beams, received by the three receivers, and finds the position of the transmitter T.

The transmitter may be located into the pointer and be connected to the processing unit by a power cable. The second option is to provide the pointer by batteries and thus to avoid the need of the cable. The third possibility of modification is to separate the transmitter from the pointer. In this case the transmitter is located near the processing unit; and the pointer, moving in space, is passive and includes only a reflector. Thus the pointer is wireless and provided with means to protect the receivers from reacting to direct beams emitted by the transmitter.

While the present invention has been described with the reference to the attached drawings, it should be appreciated, that other similar embodiments can be suggested for realization of the three-dimensional mouse system for a computer's display, or a robot.

## Claims

1. A three-dimensional mouse system for a computer's display, or a robot, comprising a pointer, movable in space by the user; a transmitter, being an integral part of said pointer; at least three receivers; a processing unit, having a microprocessor, an input/output communication interface and a connecting unit for information and power transfer; and a soft-ware means; and said transmitter and said receivers are connected to said microprocessor through said input/output communication interface; and said microprocessor is connected through said input/output communication interface to said connecting unit, attached to said computer;

so that, when said receivers react to a signal received from said transmitter, said receivers through said input/output communication interface transfer independently to said microprocessor their output signals, depending correspondingly on the space position of said transmitter with reference to said receivers; and said microprocessor computes the space position of said transmitter using the output signals received from said receivers and said transmitter; and the output signal of said microprocessor, representing the information concerning the space position of said transmitter, is transformed into an appropriate form by said input/output communication interface and is then transferred through said connecting unit to said computer; and the information transferred is then processed by said software means to provide on said computer's display or in maid robot's action a three-dimensional reflection, corresponding to the movement of said pointer, in real time, in space.

2. The three-dimensional mouse system for a computer's display, or a robot, as in claim 1, wherein said receivers are placed around said display or said robot's component, being connected to it, at predetermined distances between said receivers; and said distances could be calibrated by using a specially designed mode.

3. The three-dimensional mouse system for a computer's display, or a robot, as in claim 1,2, wherein said receivers and transmitter are ultra sonic.

4. The three-dimensional mouse system for a computer's display, or a robot, as in claim 1-3, wherein said ultra -sonic receivers and transmitter work according to a method known as "Different Time of Arrival" (DTOA) method.

5. The three-dimensional mouse system for a computer's display, or a robot, as in claim 1-3, wherein said ultra sonic receivers and transmitter work according to a method known as a phase shift detection method.

6. The three-dimensional mouse system for a computer's display, or a robot, as in claim 1, wherein said pointer is connected to said processing unit by a communication and power cable.

7. The three-dimensional mouse system for a computer's display, or a robot, as in claim 1,3, wherein said pointer is connected to said processing unit by means of ultrasonic transmission and receiving means; in such an embodiment the minimal number of said receivers is four.

8. The three-dimensional mouse system for a computer's display, or a robot, as in claim 1,2, wherein said transmitter and receivers are optic devices, emitting and receiving light beam signals correspondingly.

9. The three-dimensional mouse system for a computer's display, or a robot, as in claim 1,2,8, wherein said optic transmitter is a source of a light beam and each of said optic receivers comprises a housing, provided with a slot in its frontal wall, facing said transmitter; and said slot is provided by a lens; and the opposite wall of said housing is provided with a longitudinal unit of charge couple device (CCD unit); and said CCD unit is placed perpendicularly to said slot in said frontal wall; and said CCD unit is connected to said microprocessor's input.

10. A three-dimensional mouse system for a computer's display, or a robot, comprising a pointer, movable in apace by the user; an optic transmitter; at least three optic receivers; a processing unit, having a microprocessor, an input/output communication interface and a connecting unit for information and power transfer; and software means; and said receivers are connected to said microprocessor through said input/output communication interface; and said microprocessor is connected through said input/output communication interface to maid connecting unit, attached to said computer;

so that, when said receivers react to an optic signal, received from said pointer, said receivers through said input/output communication interface independently transfer their output signals to said microprocessor; said output signals depend correspondingly on the space position of said pointer with reference to said receivers; and said microprocessor computes the apace position of said pointer using said output signals of said receivers; and the output signal of said microprocessor, representing the information concerning the space position of said pointer, is transformed into an appropriate form by said input/output communication interface and then transferred through said connecting unit to said computer; and the information transferred through said connecting unit is then processed by said software means to provide on said computer's display, or in said robot's action, a three-dimensional reflection, corresponding to the movement of said pointer, in real time, in space.

11. The three-dimensional mouse system for a computer's display, or a robot, as in claim 10, wherein said optic transmitter is placed on said pointer and provided with a power supply cable for connecting to said processing unit.

12. The three-dimensional mouse system for a computer's display, or a robot, as in claim 10, wherein said optic transmitter is placed on said pointer; and said pointer is provided with batteries to avoid the need of a cable connection of said pointer to said processing unit.

13. The three-dimensional mouse system for a computer's display, or a robot, as in claim 10, wherein said optic transmitter is placed away from said pointer; and said pointer has a reflector, reflecting optic beams, received from said transmitter; and said receivers are protected from receiving optic beams directly from said optic transmitter.

14. The three-dimensional mouse system for a computer's display, or a robot, as in claim 1,10, wherein said microprocessor is a high speed microprocessor MOTORALA® 68HC805C4.

15. The three-dimensional mouse system for a computer's display, or a robot, as in claim 1,10, wherein said connecting unit is a standard computer connecting unit RS-232.

16. The three-dimensional mouse system for a computer's display, or a robot, as In claim 1,10, wherein said three-dimensional mouse is low power consumption system, and hence does not require any additional supporting hardware.

17. The three-dimensional mouse system for a computer's display, or a robot, as in claim 1,10, wherein said three-dimensional mouse is none low power consumption system.

18. The three-dimensional mouse system for a computer's display, or a robot, as in claim 1,10, wherein said three-dimensional mouse system comprises more than three of said receivers to improve the accuracy of computation of said pointer's position in space.

19. The three-dimensional mouse system for a computer's display, or a robot, as in claim 1,10, wherein said pointer comprises a plurality of additional functional keys for specific use.

20. The three-dimensional mouse system for a computer's display, or a robot, as in claim 1,10, wherein said pointer is in form of a ring, fittable onto a finger of the user.

**FIG. 1**

**FIG. 2**

**FIG. 3**

European Patent
Office

**EUROPEAN SEARCH REPORT**

Application Number

EP 92 30 6228

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 007 762 (SCHIER, J.)<br><br>* page 3, line 17 - page 7, line 5; figures 1,2 *<br>* page 8, line 9 - page 10, line 3 *<br>* page 10, line 28 - page 12, line 4 * | 1,3-5,7, 8,10-12, 18 | G06K11/18 |
| X | EP-A-0 211 984 (LANIER, JARON Z.)<br>* column 2, line 30 - line 46 *<br>* column 4, line 16 - line 57; figure 1 *<br>* column 6, line 16 - column 7, line 7 * | 1-4,6 | |
| X | US-A-4 862 152 (RONALD E. MILNER)<br>* column 3, line 12 - column 4, line 12; figures 1-3 *<br>* column 4, line 42 - column 5, line 10 * | 1-4 | |
| X | DE-A-3 838 605 (SCHAEFER, HARTMUT)<br>* page 2, line 1 - page 3, line 25 * | 1,3,5,6 | |
| A | | 14 | TECHNICAL FIELDS SEARCHED (Int. Cl.5 )<br><br>G06K |

The present search report has been drawn up for all claims

| Place of search | Date of completion of the search | Examiner |
|---|---|---|
| THE HAGUE | 03 DECEMBER 1992 | ALONSO Y GOICOLEA L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)